# FASCICULE DE BREVET EUROPEEN

(11) **EP 2 072 782 B1**
(45) Date de publication et mention de la délivrance du brevet: **24.11.2010**
(21) Numéro de dépôt: 07447068.3
(22) Date de dépôt: 21.12.2007
(51) Int. Cl.: F02C 9/36, F01D 25/20

(54) **Vanne de recirculation dans un moteur aeronautique**
Rückführventil in einem Flugzeugmotor
Recirculation valve in an aeronautical engine

(43) Date de publication de la demande: 24.06.2009
(73) Titulaire: Techspace Aero S.A., 4041 Milmort (BE)
(72) Inventeur: Cornet, Albert, 4800 Verviers (BE); Raimarckers, Nicolas, 4263 Tourinne (Braives) (BE); Simeon, Bernard, 6800 Libramont (BE)
(74) Mandataire: pronovem

(56) Documents cités:
- EP-A- 1 389 671
- DE-A1-102004 056 295
- JP-A- 57 070 907
- JP-A- 62 101 808
- US-A- 3 626 693

## Description

### Objet de l'invention

La présente invention se rapporte à une vanne de recirculation dans un moteur aéronautique possédant un système de lubrification et/ou de refroidissement dont certains éléments présentent un besoin d'huile relativement constant sur l'ensemble du vol.

### Etat de la technique

Les nouvelles générations de moteurs aéronautiques tendent à apporter une solution consommant de moins en moins de carburant. La réussite de cet objectif passe par l'intégration de systèmes générant de plus en plus de chaleur (« calories ») de par :
- le chargement de plus en plus important des enceintes de paliers ;
- l'intégration de réducteurs de vitesse (« gearbox ») de haute puissance (turbopropulseur, « open rotor », etc.) ;
- l'intégration de nouveaux équipements (générateur-démarreur ou « starter-generator » de haute puissance, etc.).

Ces calories doivent dès lors être reprises par l'huile, fluide de lubrification mais également caloporteur. Les besoins en huile sont donc nécessairement augmentés. Les besoins des nouveaux équipements tels que les « starter-generator » (S/G) ne répondent pas aux exigences traditionnelles en nécessitant un refroidissement par l'huile quasi constant pour toute la phase de vol.

Il est connu que les moteurs aéronautiques sont lubrifiés et/ou refroidis par un ensemble de pompes. Une partie de celles-ci, les pompes d'alimentation, assurent la mise en pression de l'huile prélevée dans le réservoir qui est fournie ensuite aux organes moteurs et équipements à lubrifier et/ou refroidir. Généralement, ces pompes sont soit entraînées par un même arbre en un "groupe de lubrification" (GdL), soit réparties individuellement dans le moteur.

Or, par entraînement mécanique (classique) du groupe de lubrification (GdL) monté sur l'AGB (« Accessory gearbox »), les débits fournis dépendent fortement de la vitesse de rotation du moteur.

Selon l'état de la technique, on utilise des pompes volumétriques et un entraînement mécanique des pompes d'alimentation ou des groupes de lubrification (GdL). Les pompes d'alimentation sont nécessairement dimensionnées pour un seul cas de vol et peuvent dès lors être surdimensionnées pour d'autres cas de vol. En particulier, étant donné le besoin en huile pratiquement constant pour toutes les phases de vol dans certains équipements actuels, le débit d'huile fourni est beaucoup trop important pour les phases de vol à vitesse de rotation élevée.

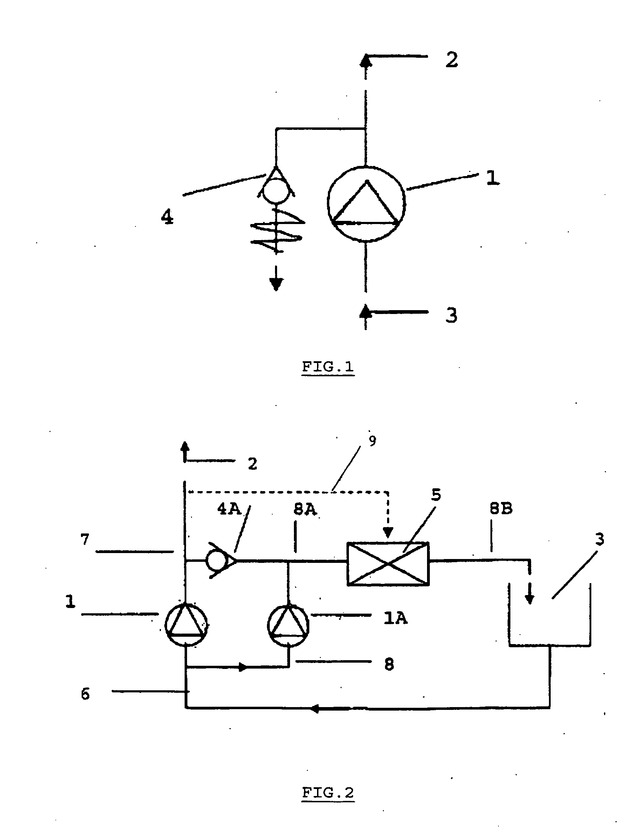

Selon l'état de la technique représenté sur la figure 1, une solution consiste à intégrer un système de dérivation ou « by-pass » 4. Celui-ci, placé en sortie 2 de la « fonction » d'alimentation 1, dévie une partie du débit vers l'entrée 3 de cette même fonction (ou vers le réservoir d'huile). La pression de l'huile qui augmente donc au passage dans la pompe doit être dégradée dans la ligne by-pass.

La dégradation de l'énergie de pression entraîne une dissipation d'énergie inutile mais incontournable selon l'état de l'art.

D'autre part, le document JP 57 070907 A divulgue une installation de lubrification dans une turbine à vapeur comportant une ligne de dérivation montée en aval de la pompe d'alimentation principale, comportant elle-même une pompe auxiliaire qui assure en cas de défaillance de la pompe principale un apport supplémentaire d'huile.

Dans un autre contexte, le document DE 10 2004 056295 A1 propose un dispositif de lubrification dans un moteur d'avion où l'apport d'huile est assuré même lorsque l'avion est soumis à des g nuls ou négatifs. L'installation est constituée d'une ligne d'alimentation allant du réservoir d'huile aux éléments à lubrifier et d'une ligne de récupération renvoyant l'huile au réservoir d'huile. L'installation comporte en outre une ligne de dérivation montée sur la ligne de récupération et débouchant sur la ligne d'alimentation. La ligne de dérivation comporte une vanne à trois voies configurés pour que dans les conditions de vol normal (g positifs) où la pression est suffisante dans la ligne d'alimentation, la ligne de dérivation ne soit pas alimentée tandis que dans les condition de vol où l'avion est soumis à des g nuls ou négatifs et, en conséquence, à une chute de pression dans la ligne d'alimentation, il y ait un approvisionnement supplémentaire via la ligne de dérivation.

Le document JP 62 101808 A divulgue un dispositif pour réguler la pression de lubrification de roulements. Plus précisément, le dispositif comporte une vanne pilote qui contrôle la pression à l'entrée et à la sortie d'une vanne de régulation de pression lorsque la pompe passe de la phase de démarrage à la phase de fonctionnement nominal.

Une autre solution de l'état de la technique pour éviter une dissipation d'énergie inutile est d'entraîner les pompes d'alimentation par des moteurs électriques. Cependant, de tels équipements alourdissent considérablement le moteur.

Le document US 3,626,693 A présente une installation comportant deux pompes destinées à lubrifier des roulements dans une turbine à gaz. Une première pompe entraînée par un moteur électrique assure uniquement la lubrification des roulements lors de la phase de démarrage de la turbine tandis que la seconde pompe, entraînée mécaniquement, assure la lubrification des roulements une fois que la pression d'huile, atteinte à sa sortie dépasse une valeur prédéterminée. L'installation comporte en outre une ligne de dérivation disposé en aval de la seconde pompe pour dévier le surplus d'huile vers le réservoir d'huile.

Le document EP 1 389 671 A divulgue une installation de lubrification dans une turbine à gaz avec une pompe d'alimentation en huile entraînée par un moteur électriques et des pompes de récupération du surplus d'huile issu des éléments à lubrifier également entraînées par des moteurs électriques.

### Buts de l'invention

La présente invention vise à fournir un système de lubrification qui permette de s'affranchir des inconvénients de l'état de la technique.

En particulier, l'invention a pour but de fournir un dispositif permettant d'éviter la dissipation thermique par dégradation de l'énergie de pression de lubrification et partant de réduire le besoin en refroidissement.

L'invention a encore pour but un gain de masse par rapport aux systèmes d'entraînement électriques des pompes selon l'état de la technique.

L'invention poursuit encore un but de simplification mécanique et d'assurer une sûreté de fonctionnement acceptable.

### Résumé de l'invention

Un premier objet de la présente invention concerne une installation de lubrification et/ou de refroidissement dans un moteur aéronautique comprenant un réservoir d'huile, une conduite d'alimentation principale alimentant une pompe principale fournissant un débit dans une conduite de refoulement de la pompe principale vers un ou plusieurs systèmes à lubrifier et/ou à refroidir, **caractérisée en ce que** l'installation comporte en outre une conduite d'alimentation d'une pompe auxiliaire montée en parallèle sur la conduite principale et connectée à une pompe d'alimentation auxiliaire, cette dernière fournissant un débit dans une conduite de refoulement de la pompe auxiliaire connectée par un circuit à trois voies d'une part à un clapet anti-retour dirigé vers la conduite de refoulement principale et d'autre part à, une vanne de recirculation, commandée en option par la pression de la conduite de refoulement principale, pour dévier le débit de la pompe d'alimentation auxiliaire dans une conduite de retour directement vers le réservoir ou vers la conduite d'alimentation principale en amont de la pompe principale.

Selon une première forme d'exécution préférée de l'invention, la vanne de recirculation comprend un tiroir-obturateur coopérant avec un ressort calibré pour que le passage d'huile de la conduite de refoulement secondaire à la conduite de retour soit obturé par le tiroir-obturateur, lorsque la pression commandant la vanne de recirculation au niveau d'une première entrée, est inférieure à une valeur prédéterminée, ledit tiroir étant apte à se déplacer, une fois cette valeur prédéterminée de pression atteinte, de manière à permettre le passage de lubrifiant de la conduite de refoulement secondaire vers la conduite de retour, par ouverture du tiroir-obturateur, entre une deuxième entrée et une sortie de la vanne donnant vers la conduite de retour.

Avantageusement, la vanne de recirculation est une vanne à tiroir qui comprend un obturateur proprement dit de forme cylindrique et est configurée pour que la deuxième entrée et la sortie soient alignées et perpendiculaires à la face latérale de l'obturateur.

Encore avantageusement, la vanne de recirculation comprend un obturateur proprement dit de forme sphérique et est configurée pour que la deuxième entrée et la sortie soient respectivement en amont et en aval de l'obturateur de manière à agir dans le sens du ressort.

De préférence, la surface du tiroir-obturateur est configurée pour, qu'à l'arrêt du moteur, la pression en huile appliquée à la première entrée sur la surface du tiroir-obturateur chute au point de faire refermer celui-ci grâce à l'action du ressort.

Encore de préférence, la vanne de recirculation est configurée pour que la pression au niveau de la première entrée soit égale à la pression dans la conduite de refoulement principale.

Selon une deuxième forme d'exécution préférée, la fonction de la tête du tiroir-obturateur est assurée par un diaphragme.

Un deuxième objet de la présente invention concerne un procédé de lubrification et de refroidissement d'un équipement de moteur aéronautique, au moyen de l'installation susmentionnée, caractérisé au moins par les étapes suivantes :
- dans la phase de démarrage du moteur, le débit fourni par la pompe d'alimentation auxiliaire est envoyé dans l'équipement à lubrifier et à refroidir, la vanne de recirculation étant fermée et le clapet anti-retour ouvert ;
- lorsque la vitesse du moteur augmente et que le débit fourni par la pompe principale satisfait les besoins en lubrifiant, la pression dans la ligne de refoulement principale augmente et commande la vanne de recirculation qui s'ouvre en faisant chuter la pression en sortie de la pompe auxiliaire dans la ligne de refoulement secondaire et en provoquant la fermeture du clapet anti-retour, le débit produit par la pompe auxiliaire étant dès lors dévié directement vers le réservoir ;
- le volume de lubrifiant recirculé dans la conduite auxiliaire retourne au réservoir sans changement de pression important.

Avantageusement, le procédé de l'invention est caractérisé par au moins les étapes suivante
- dans la phase de démarrage du moteur, le débit fourni par la pompe d'alimentation auxiliaire est envoyé dans l'équipement à lubrifier et à refroidir, la vanne de recirculation étant fermée et le clapet anti-retour ouvert ;
- lorsque la pression croissante appliquée sur la tête du tiroir-obturateur dépasse ladite valeur prédéterminée, fixée par la force de rappel du ressort, le tiroir se déplace en direction de l'obturateur, permettant le passage de lubrifiant se trouvant dans la conduite de refoulement secondaire vers le réservoir au travers de la conduite de retour au réservoir, la pression dans la conduite de refoulement secondaire chutant et créant ainsi la fermeture du clapet anti-retour par la différence de pression appliquée aux bornes de celui-ci ;
- tout le débit de la pompe auxiliaire est dévié vers le réservoir.

Un troisième objet de la présente invention concerne l'utilisation de l'installation de lubrification précitée, pour le refroidissement d'un équipement de moteur aéronautique présentant un besoin en huile essentiellement constant pour toutes les phases de vol.

Cette utilisation trouvera une application avantageuse dans le cas où ledit équipement est un « starter-generator » électrique.

### Brève description des figures

La figure 1, déjà mentionnée, représente une pompe d'alimentation munie d'un système de by-pass pour système de lubrification et/ou de refroidissement dans un moteur aéronautique, selon l'état de la technique.

La figure 2 représente schématiquement une forme d'exécution générale selon l'invention, comportant une pompe d'alimentation auxiliaire et une vanne de recirculation.

La figure 3 représente une vanne de recirculation selon une forme d'exécution préférée de l'invention.

La figure 4 représente une variante de la forme d'exécution de la figure 3, présentant un diaphragme permettait la parfaite étanchéité entre les deux circuits et pilotant la position de l'obturateur monté sur ressort.

### Description détaillée de l'invention

L'invention consiste à prévoir des moyens de déviation d'une partie du débit d'alimentation en évitant que celle-ci soit renvoyée à une pression élevée (pression de sortie demandée), permettant ainsi de limiter la dissipation thermique. Cette invention est particulièrement bien adaptée lorsque le débit à fournir est pratiquement constant sur toute l'enveloppe de vol.

L'invention consiste à intégrer, dans une ligne auxiliaire 8, 8A, 8B une vanne de recirculation 5 entre la sortie d'une pompe d'alimentation auxiliaire supplémentaire 1A et le réservoir 3, tout en connectant un clapet anti-retour 4A à la sortie de la pompe d'alimentation auxiliaire 1A (voir figure 2).

Dans la phase de démarrage du moteur, la pompe d'alimentation principale 1 entraînée mécaniquement tourne à une faible vitesse. Le débit demandé est cependant élevé. Il est donc nécessaire que le débit produit par la pompe secondaire d'alimentation 1A soit envoyé dans le système à lubrifier/refroidir 2. La vanne de recirculation 5 doit être fermée durant cette phase et le clapet anti-retour 4A s'ouvre grâce à la pression d'huile dans la ligne auxiliaire 8A.

Lorsque la vitesse du moteur augmente, le débit fourni par 1a pompe auxiliaire 1A n'est plus nécessaire. La pompe principale 1 débite en effet suffisamment pour satisfaire aux besoins du système à lubrifier. Il faut donc que la vanne de recirculation 5 s'ouvre par commande hydraulique, par exemple liée à la pression dans la ligne de refoulement de la pompe principale 7. Dans ce cas, la pression dans la ligne auxiliaire 8A chute, ce qui provoque la fermeture du clapet anti-retour 4A.

De cette façon, le débit fourni au système à lubrifier correspond au besoin spécifié et le volume d'huile recirculé, selon un débit renvoyé au réservoir 3 (boucle 6, 8, 8A, 8B, 3), n'est pas soumis à des changements de pression importants. On économise ainsi la dissipation d'énergie liée au changement de pression.

On notera que la vanne de recirculation 5 est une vanne qui s'ouvre « en grand » pour faire chuter la pression dans la ligne auxiliaire (système « plein ouvert »).

### Description de formes d'exécution préférées de l'invention

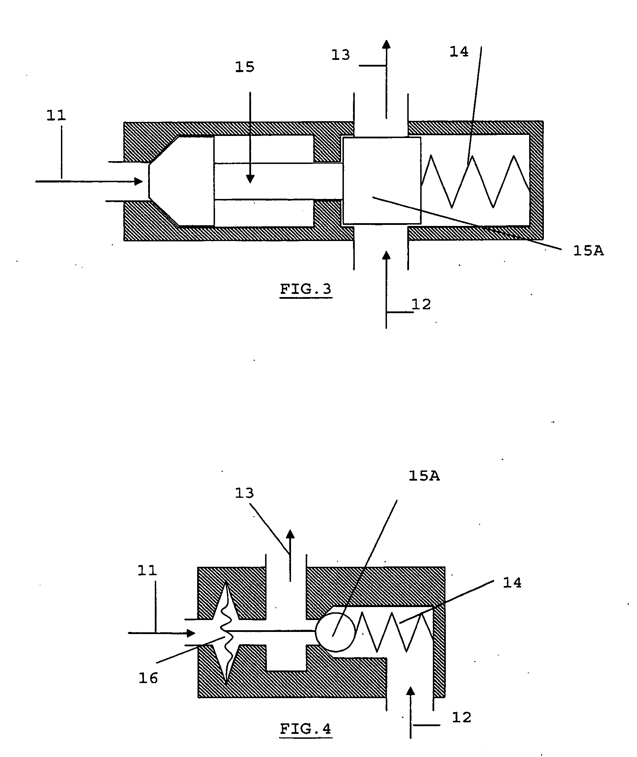

La figure 3 montre schématiquement un exemple de vanne de recirculation selon la présente invention. Les flèches 11, 12 et 13 indiquent respectivement la pression d'huile venant de la ligne de refoulement de la pompe principale 7, de la ligne de refoulement de la pompe auxiliaire 8A et de la ligne de retour vers le réservoir 8B.

Quand la pression 11 dans la ligne de refoulement de la pompe principale atteint la limite préfixée notamment par la raideur du ressort 14, le tiroir 15 se déplace vers la droite pour ouvrir le canal 12, 13. La pression en sortie de la pompe auxiliaire va donc chuter et fermer le clapet 4A du circuit. La pression 11 va donc chuter également mais les sections du tiroir 15 sont calculées pour que l'équilibre des forces du ressort et de celle appliquée par l'huile ne referment pas le canal 12, 13.

Selon une variante représentée sur la figure 4, la force appliquée par l'huile dans la conduite principale sur un diaphragme 16 va augmenter jusqu'à atteindre une valeur limite, dépendant de la raideur du ressort 14 et de la pression appliquée par l'huile 12 venant de la pompe auxiliaire sur l'obturateur 15A. Une fois que l'obturateur 15A permet le passage de l'huile vers le réservoir 3, la pression dans la ligne 12, 13 va s'équilibrer, accélérant ainsi le mouvement de l'obturateur 15A, car seule la force du ressort intervient alors. La forme sphérique de l'obturateur 15A assure la stabilité de la vanne, une fois ouverte. L'avantage de l'utilisation d'un diaphragme est de maintenir une parfaite étanchéité entre le circuit principal et le circuit secondaire.

Le clapet 4A du circuit va se fermer et tout le débit de la pompe auxiliaire 1A sera dévié vers le réservoir.

La pression 11 va chuter à cause de la diminution de débit mais le ressort 14 est calibré pour qu'il n'y ait pas de refermeture de l'obturateur 15A.

Une fois le moteur à l'arrêt, l'obturateur 15A, reprendra sa place initiale grâce à la force du ressort 14.

### Avantages de l'invention

L'avantage essentiel de l'invention est de diminuer la dissipation thermique et de réduire ainsi le besoin en refroidissement.

Cette invention permet également un gain de masse par rapport à des systèmes d'entraînement électriques des pompes permettant de réguler la vitesse de rotation de la pompe d'alimentation.

La sûreté de fonctionnement de l'invention est également bénéfique puisque les seuls cas de dysfonctionnement possibles entraîneraient des répercussions sur le moteur d'avion au démarrage.

Enfin, le dispositif selon l'invention est constitué d'éléments mécaniques simples et donc peu coûteux.

## Revendications

1. Installation de lubrification et/ou de refroidissement dans un moteur aéronautique comprenant un réservoir d'huile (3), une conduite d'alimentation principale (6) alimentant une pompe principale (1) fournissant un débit dans une conduite de refoulement de la pompe principale (7) vers un ou plusieurs systèmes à lubrifier et /ou refroidir (2), **caractérisée en ce que** l'installation comporte en outre une conduite d'alimentation d'une pompe auxiliaire (8) montée en parallèle sur la conduite principale (6) et connectée à une pompe d'alimentation auxiliaire (1A), cette dernière étant actionnée en continu, conjointement avère la pompe principale (1), par la rotation du moteur, et fournissant un débit dans une conduite de refoulement de la pompe auxiliaire (8A) connectée par un circuit à trois voies d'une part à un clapet anti-retour (4A) dirigé vers la conduite de refoulement principale (7) et d'autre part à une vanne de recirculation (5), pour dévier le débit de la pompe d'alimentation auxiliaire (1A) dans une conduite de retour (8B) directement vers le réservoir (3).

2. Installation selon la revendication 1, **caractérisée en ce que** la vanne de recirculation (5) comprend un tiroir-obturateur (15) coopérant avec un ressort (14) calibré pour que le passage du lubrifiant de la conduite de refoulement secondaire (8A) à la conduite de retour (8B) soit obturé par le tiroir-obturateur (15), lorsque la pression commandant la vanne de recirculation (5) au niveau d'une première entrée (11) est inférieure à une valeur prédéterminée, ledit tiroir (15) étant apte à se déplacer, une fois cette valeur prédéterminée de pression (11) atteinte, de manière à permettre le passage de lubrifiant de la conduite secondaire (8A) vers la conduite de retour (8B), par ouverture du tiroir-obturateur (15), entre une deuxième entrée (12) et une sortie (13) de la vanne (5) donnant vers la conduite de retour (8B).

3. Installation selon la revendication 2, **caractérisée en ce que** la vanne de recirculation (5) est une vanne à tiroir qui comprend un obturateur proprement dit (15A) de forme cylindrique et est configurée pour que la deuxième entrée (12) et la sortie (13) soient alignées et perpendiculaires à la face latérale de l'obturateur (15A)

4. Installation selon la revendication 2, **caractérisée en ce que** la vanne de recirculation (5) comprend un obturateur proprement dit (15A) de forme sphérique et est configurée pour que la deuxième entrée (12) et la sortie (13) soient respectivement en amont et en aval de l'obturateur de manière à agir dans le sens du ressort.

5. Installation selon la revendication 2, **caractérisée en ce que** la surface du tiroir-obturateur (15) est configurée pour, qu'à l'arrêt du moteur, la pression en huile appliquée à la première entrée (11) sur la surface du tiroir-obturateur (15) chute au point de faire refermer celui-ci grâce à l'action du ressort (14).

6. Installation selon la revendication 2, **caractérisée en ce que** la vanne de recirculation (5) est configurée pour que la pression au niveau de la première entrée (11) soit égale à la pression dans la conduite de refoulement principale (7).

7. Installation selon la revendication 2, **caractérisée en ce que** la fonction de la tête du tiroir-obturateur (15) est assurée par un diaphragme.

8. Installation de lubrification et/ou de refroidissement dans un moteur aéronautique comprenant un réservoir d'huile (3), une conduite d'alimentation principale (6) alimentant une pompe principale (1) fournissant un débit dans une conduite de refoulement de la pompe principale (7) vers un ou plusieurs systèmes à lubrifier et /ou refroidir (2), **caractérisée en ce que** l'installation comporte en outre une conduite d'alimentation d'une pompe auxiliaire (8) montée en parallèle sur la conduite principale (6) et connectée à une pompe d'alimentation auxiliaire (1A), cette dernière étant actionnée en continu, conjointement avec la pompe principale (1), par la rotation du moteur, et fournissant un débit dans une conduite de refoulement de la pompe auxiliaire (8A) connectée par un circuit à trois voies d'une part à un clapet anti-retour (4A) dirigé vers la conduite de refoulement principale (7) et d'autre part à une vanne de recirculation (5), pour dévier le débit de la pompe d'alimentation auxiliaire (1A) dans une conduite de retour (8B) vers la conduite d'alimentation principale (6) en amont de la pompe principale (1).

9. Installation selon la revendication 1, **caractérisée en ce que** la vanne de recirculation (5)) est commandée par la pression de la conduite de refoulement principale (7).

10. Procédé de lubrification et de refroidissement d'un équipement de moteur aéronautique, au moyen de l'installation selon l'une quelconque des revendications précédentes, **caractérisé** au moins par les étapes suivantes :
- dans la phase de démarrage du moteur, le débit fourni par la pompe d'alimentation auxiliaire (1A) est envoyé dans l'équipement à lubrifier et à refroidir (2), la vanne de recirculation (5) étant fermée et le clapet anti-retour (4A) ouvert ;
- lorsque la vitesse du moteur augmente et que le débit fourni par la pompe principale (1) satisfait les besoins en lubrifiant, la pression dans la ligne de refoulement principale (7) augmente et commande la vanne de recirculation (5) qui s'ouvre en faisant chuter la pression en sortie de la pompe auxiliaire (1A) dans la ligne de refoulement secondaire (8A) et en provoquant la fermeture du clapet anti-retour (4A), le débit produit par la pompe auxiliaire (1A) étant dès lors dévié directement vers le réservoir (3) ;
- le volume de lubrifiant recirculé dans la conduite auxiliaire (8, 8A, 8B) retourne au réservoir (3) sans changement de pression important.

11. Procédé de lubrification ou de refroidissement d'un équipement de moteur aéronautique, au moyen de l'installation selon la revendication 2 ou 3, **caractérisé par** au moins les étapes suivantes :
- dans la phase de démarrage du moteur, le débit fourni par la pompe d'alimentation auxiliaire (1A) est envoyé dans l'équipement à lubrifier et à refroidir (2), la vanne de recirculation (5) étant fermée et le clapet anti-retour (4A) ouvert ;
- lorsque la pression croissante appliquée sur la tête du tiroir-obturateur (15) dépasse ladite valeur prédéterminée, fixée par la force de rappel du ressort (14), le tiroir (15) se déplace en direction de l'obturateur (15A), permettant le passage de lubrifiant se trouvant dans la conduite de refoulement secondaire (8A) vers le réservoir (3) au travers de la conduite de retour au réservoir (8B), la pression dans 1a conduite de refoulement secondaire (8A) chutant et créant ainsi la fermeture du clapet anti-retour (4A) par la différence de pression appliquée aux bornes de celui-ci ;
- tout le débit de la pompe auxiliaire (1A) est dévié vers le réservoir (3).

12. Utilisation de l'installation selon l'une quelconque des revendications 1 à 3, pour la lubrification et/ou le refroidissement d'un équipement de moteur aéronautique présentant un besoin en huile essentiellement constant pour toutes les phases de vol.

13. Utilisation selon la revendication 6, **caractérisée en ce que** ledit équipement est un « starter-generator » électrique.

## Claims

1. Lubrication and/or cooling installation in an aircraft engine comprising an oil tank (3), a main feed pipe (6) feeding a main pump (1) supplying a flow in a discharge line of the main pump (7) towards one or several systems (2) to be lubricated and/or cooled, **characterised in that** the installation moreover comprises a feed pipe for an auxiliary pump (8) fitted in parallel onto the main pipe (6) and connected to an auxiliary feed pump (1A), the latter being continuously operated together with the main pump (1) by the rotation of the engine and supplying a flow in a discharge line of the auxiliary pump (8A) connected by a three-way circuit on the one hand to a non-return valve (4A) directed towards the main discharge line (7), and on the other hand to a recirculation valve (5) in order to divert the flow of the auxiliary feed pump (1A) into a return line (8B) directly towards the tank (3).

2. Installation according to Claim 1, **characterised in that** the recirculation valve (5) comprises a sliding shutter (15) co-operating with a spring (14) calibrate so that the passage of the lubricant from the secondary discharge line (8A) to the return line (8B) is blocked by the sliding shutter (15) when the pressure controlling the recirculation valve (5) at the level of a first intake (11) is lower than a predetermined value, said slide (15) being designed to move once this predetermined pressure value (11) is reached, in such a way as to allow the passage of the lubricant from the secondary line (8A) to the return line (8B), by the opening of the sliding shutter (15), between a second intake (12) and an outlet (13) of the valve (5) leading to the return line (8B).

3. Installation according to Claim 2, **characterised in that** the recirculation valve (5) is a slide valve that comprises an actual shutter (15A) of cylindrical shape and is configured so that the second intake (12) and the outset (13) are aligned and perpendicular to the side surface of the shutter (15A).

4. Installation according to Claim 2, **characterised in that** the recirculation valve (5) comprises an actual shutter (15A) of spherical shape and is configured so that the second intake (12) and the outlet (13) are upstream and downstream, respectively from the shutter so as to operate in the direction of the spring.

5. Installation according to Claim 2, **characterised in that** the surface of the sliding shutter (15) is configured so that, when the engine stops, the oil pressure applied to the first intake (11) on the surface of the sliding shutter (15) drops until the latter closes again by way of the action of the spring (14).

6. Installation according to Claim 2, **characterised in that** the recirculation valve (5) is configured so that the pressure at the level of the first intake (11) is equal to the pressure in the main discharge line (7).

7. Installation according to Claim 2, **characterised in that** the function of the head of the sliding shutter (15) is ensured by a diaphragm (16).

8. Lubrication and/or cooling installation in an aircraft engine comprising an oil tank (3), a main feed pipe (6) feeding a main pump (1) supplying a flow in a discharge line of the main pump (7) towards one or several systems (2) to be lubricated and/or cooled, **characterised in that** the installation moreover comprises a feed pipe for an auxiliary pump (8) fitted in parallel onto the main pipe (6) and connected to an auxiliary feed pump (1A), the latter being continuously operated together with the main pump (1) by the rotation of the engine and supplying a flow in a discharge line of the auxiliary pump (8A) connected by a three-way circuit on the one hand to a non-return valve (4A) directed towards the main discharge line (7), and on the other hand to a recirculation valve (5) in order to divert the flow of the auxiliary feed pump (1A) into a return line (8B) towards the main feed pipe (6) upstream from the main pump (1).

9. Installation according to Claim 1, **characterised in that** the recirculation valve (5) is controlled by the pressure in the main discharge line (7).

10. Method for lubricating and cooling aircraft engine equipment by means of the installation according to any one of the preceding claims, **characterised by** at least the following stages:
- In the start-up phase of the engine, the flow supplied by the auxiliary feed pump (1A) is fed into the piece of equipment to be lubricated and cooled (2), the recirculation valve (5) being closed and the non-return valve (4A) open;
- when the engine speed increases and the flow supplied by the main pump (1) meets the lubricant requirements, the pressure in the main discharge line (7) increases and activates the recirculation valve (5) which opens by causing the pressure to drop at the outlet from the auxiliary pump (1A) in the secondary discharge line (8A) and by causing the non-return valve (4A) to close, the flow produced by the auxiliary pump (1A) thus being diverted directly towards the tank (3);
- The volume of lubricant recirculated in the auxiliary line (8,8A,8B) returns to the tank (3) without a major pressure chance.

11. Method for lubricating, or cooling aircraft engine equipment by means of the installation according to Claim 2 or 3, **characterised by** at least the following stages:
- In the start-up phase of the engine, the flow supplied by the auxiliary feed pump (1A) is fed to the piece of equipment (2) to be lubricated and cooled, the recirculation valve (5) being closed and the non-return valve (4A) open;
- When the increasing pressure applied to the head of the sliding shutter (15) exceeds said predetermined value, which is set by the return force of the spring (14), the slide (15) moves in the direction of the shutter (15A), allowing the passage of the lubricant located in the secondary discharge line (8A) to the tank (3) through the return line (8B) towards the tank, the pressure in the secondary discharge line (8A) dripping and thereby causing the non-return valve (4A) to close by the pressure difference applied to its ends;
- The entire flow from the auxiliary pump (1A) is diverted towards the tank (3).

12. Use of the installation according to any one of Claims 1 to 3, for lubricating and/or cooling aircraft engine equipment with an oil requirement that is more or less constant for all flight phases.

13. Use according to Claim 6, **characterised in that** said equipment is an electric "starter-generator."

## Patentansprüche

1. Schmier- und/oder Kühleinrichtung in einem Flugzeugmotor, umfassend einen Ölbehälter (3), eine Hauptversorgungsleitung (6), die eine Hauptpumpe (1) versorgt, die einen Durchsatz in einer Förderleitung der Hauptpumpe (7) zu einem oder mehreren zu schmierenden und/oder zu kühlenden Systemen (2) bereitstellt, **dadurch gekennzeichnet, dass** die Einrichtung ferner eine Versorgungsleitung einer Hilfspumpe (8) umfasst, die parallel auf der Hauptleitung (6) montiert ist und an eine Hilfsversorgungspumpe (1A) angeschlossen ist, wobei letztere zusammen mit der Hauptpumpe (1) durch die Drehung des Motors durchgehend betätigt wird und einen Durchsatz in einer Förderleistung der Hilfspumpe (8A) bereitstellt, die über eine Dreiwegschaltung einerseits an ein Rückschlagventil (4A), das der Hauptförderleitung (7) zugewandt ist, und andererseits an ein Rückführungsventil (5) angeschlossen ist, um den Durchsatz der Hilfsveraorgungspumpe (1A) in einer Rückleitung (8B) direkt zum Behälter (3) umzuleiten.

2. Einrichtung nach Anspruch 1, **dadurch gekennzeichnet, dass** das Rückführungsventil (5) einen Verschlussschieber (15) umfasst, der mit einer Feder (14) zusammenwirkt, die derart kalibriert ist, dass der Durchgang des Schmiermittels von der sekundären Förderleitung (8A) zu der Rückleitung (8B) durch den Verschlussschieber (15) verschlossen ist, wenn der Druck, der das Rückführungsventil (5) steuert, an einem ersten Eingang (11) geringer ist als ein vorherbestimmter,Wert, wobei der Schieber (15) in der Lage ist sich zu bewegen, nachdem dieser vorherbestimmte Druckwert (11) erreicht ist, um den Durchgang des Schmiermittels von der sekundären Leitung (8A) zu der Rückleitung (8B) zu ermöglichen, durch Öffnen des Verschlussechiebers (15), zwischen einem zweiten Eingang (12) und einem Ausgang (13) des Ventils (5), der in die Rückleitung (8B) hinausgeht.

3. Einrichtung nach Anspruch 2, **dadurch gekennzeichnet, dass** das Rückführungsventil (5) ein Verschlusozichieber ist, der einen eigentlichen zylinderförmigen Verschluss (15A) umfasst und so konfiguriert ist, dass der zweite Eingang (12) und der Ausgang (13) auf die Seitenfläche das Verschlusses (15A) ausgerichtet und dazu rechtwinklig sind.

4. Einrichtung nach Anspruch 2, **dadurch gekennzeichnet, dass** das Rückführungsventil (5) einen eigentlichen kugelförmigen Verschluss (15A) umfasst und so konfiguriert ist, dass der zweite Eingang (12) und der Ausgang (13) jeweils oberhalb und unterhalb des Verschlusses angeordnet sind, um in der Richtung der Feder zu wirken.

5. Einrichtung nach Anspruch 2, **dadurch gekennzeichnet, dass** die Oberfläche des Verschlussschiebers (15) so konfiguriert ist, dass beim Anhalten des Motors der Öldruck, der auf den ersten Eingang (11) an der Oberfläche des Verschlussschiebers (15) ausgeübt wird, in dem Ausmaß abfällt, dass er diesen durch die Einwirkung der Feder (14) wieder schließt.

6. Einrichtung nach Anspruch 2, **dadurch gekennzeichnet, dass** das Rückführungsventil (5) so konfiguriert ist, dass der Druck an dem ersten Eingang (11) gleich dem Druck in der Hauptförderleitung (7) ist.

7. Einrichtung nach Anspruch 2, **dadurch gekennzeichnet, dass** die Funktion des Kopfes des Verschlussschiebers (15) durch eine Federplatte sichergestellt wird.

8. Schmier- und/oder Kühleinrichtung in einem Flugzeugmotor, umfassend einen Ölbehälter (3), eine Hauptversorgungsleitung (5), die eine Hauptpumpe (1) versorgt, die einen Durchsatz in einer Förderleitung der Hauptpumpe (7) zu einem oder mehreren zu schmierenden und/oder zu kühlenden Systemen (2) bereitstellt, **dadurch gekennzeichnet, dass** die Einrichtung ferner eine Versorgungsleitung einer Hilfspumpe (8) umfasst, die parallel auf der Hauptleitung (6) montiert ist und an eine Hilfsversorgungspumpe (1A) angeschlossen ist, wobei letztere zusammen mit der Hauptpumpe (1) durch die Drehung des Motors durchgehend betätigt wird und einen Durchsatz in einer Förderleitung der Hilfspumpe (8A) bereitstellt, die durch eine Dreiwegschaltung einerseits an ein Rückschlagventil (4A), das zu einer Hauptförderleitung (7) gerichtet ist, und andererseits an ein Rückführungsventil (5) angeschlossen ist, um den Durchsatz der Hilfsversorgungspumpe (1A) in einer Rückleitung (8B) zu der Hauptversorgungsleitung (6) oberhalb der Hauptpumpe (1) umzuleiten.

9. Einrichtung nach Anspruch 1, **dadurch gekennzeichnet, dass** das Rückführungsventil (5) durch den Druck der Hauptförderleitung (7) gesteuert wird.

10. Verfahren zum Schmieren und Kühlen einer Flugzeugmotorausstattung, mittels der Einrichtung nach einem der vorhergehenden Ansprüche, **gekennzeichnet** mindestens durch folgende Schritte:
- während der Startphase des Motors wird der Durchsatz, der von der Hilfsversorgungspumpe (1A) bereitgestellt wird, in die zu schmierende oder zu kühlende Ausstattung (2) gesendet, wobei das Rückführungsventil (5) geschlossen und das Rückschlagventil (4A) offen ist;
- wenn die Motorgeschwindigkeit zunimmt und der von der Hauptpumpe (1) bereitgestellte Durchsatz den Bedarf an Schmiermittel erfüllt, erhöht sich der Druck in der Hauptförderleitung (7) und steuert das Rückführungsventil (5), das sich öffnet und **dadurch** den Druck am Ausgang der Hilfspumpe (1A) in der sekundären Förderleitung (8A) absenkt und das Verschließen des Rückschlagventils (4A) verursacht, wobei der von der Hilfspumpe (1A) erzeugte Durchsatz somit direkt zum Behälter (3) umgeleitet wird;
- das Volumen des zurückgeführten Schmiermittels in der Hilfsleitung (8, 8A, 8E) kehrt ohne große Druckänderung in den Behälter (3) zurück.

11. Verfahren zum Schmieren oder Kühlen einer Ausstattung eines Flugzeugmotors, mittels der Einrichtung nach Anspruch 2 oder 3, **gekennzeichnet** mindestens durch folgende Schritte:
- während der Startphase des Motors wird der Durchsatz, der von der Hilfsversorgungspumpe (1A) bereitgestellt wird, in die zu schmierende oder zu kühlende Ausstattung (2) gesendet, wobei das Rückführungsventil (5) geschlossen und das Rückschlagventil (4A) offen ist;
- wenn der ansteigende Druck, der auf den Kopf des Verschlussschiebers (15) ausgeübt wird, den vorherbestimmten Wert übersteigt, der von der Rückstellkraft der Feder (14) festgelegt wird, bewegt sich der Schieber (15) in Richtung auf den Verschluss (15A), wodurch er den Durchgang von Schmiermittel, das sich in der sekundären Förderleitung (8A) zu dem Behälter (3) befindet, durch die Rückleitung hindurch zu dem Behälter (8B) erlaubt, wobei der Druck in der sekundären Förderleitung (8A) absinkt und **dadurch** das Verschließen des Rückschlagventils (4A) durch den Druckunterschied bewirkt, der auf seine Anschlüsse ausgeübt wird;
- der gesamte Durchsatz der Hilfspumpe (1A) wird zum Behälter (3) umgeleitet.

12. Verwendung der Einrichtung nach einem der Ansprüche 1 bis 3, zum Schmieren und/oder Kühlen einer Ausstattung eines Flugzeugmotors, der einen im Wesentlichen konstanten Ölbedarf für alle Flugphasen aufweist.

13. Verwendung nach Anspruch 6, **dadurch gekennzeichnet, dass** die Ausstattung ein elektrischer Starter-Generator ist.
